# EUROPEAN PATENT APPLICATION

(11) **EP 4 818 287 A1**
(43) Date of publication of application: **07.10.2026**
(21) Application number: 25167951.0
(22) Date of filing: 02.04.2025
(51) Int. Cl.: C09K 8/035, C09K 8/68, E21B 43/26

(54) **FRICTION REDUCING POLYMER**

(71) Applicant: SNF Group, 42160 Andrézieux-Bouthéon (FR)
(72) Inventor: DELORME, Joanna, 42160 ANDREZIEUX-BOUTHEON (FR); BESSET, Céline, 42160 ANDREZIEUX-BOUTHEON (FR); BLONDEL, Frédéric, 42160 ANDREZIEUX-BOUTHEON (FR)
(74) Representative: Ipsilon

(57) **Abstract**

The present invention relates to a friction reducing polymer, a fracturing fluid, a method for hydraulic fracturing and a method for reducing friction of a fluid in a pipe comprising bringing into contact said fluid with a friction reducing polymer.

## Description

### TECHNICAL FIELD OF THE INVENTION

The present invention relates to a friction reducing polymer, a fracturing fluid and a method for hydraulic fracturing using said friction reducing polymer.

### TECHNICAL BACKGROUND

The production of hydrocarbons (oil and/or gas) from unconventional underground reservoirs has been developing for several years and requires the opening of fractures in the reservoir for economic hydrocarbon production.

In the present description of the prior art and of the invention, the term "unconventional underground reservoirs" or "unconventional reservoirs" designates deposits requiring particular extraction technologies because they do not exist in the form of an accumulation in a porous and permeable rock (see Les hydrocarbures de roche-mère en France, Rapport provisoire - CGIET n° 2011-04-G -, Sustainable Development, Transport and Housing - April 2011*).* For unconventional gas reservoirs, mention may be made of shale gas, coal bed methane or tight gas. For unconventional oil reservoirs, mention may be made of heavy oil, shale oil or tight oil.

The reserves contained in unconventional reservoirs are vast and widely distributed in areas that were previously unexploitable. In the United States, shale gas is extensively developed and accounts in 2022 for 79% of the total natural gas produced in the country according to the U.S. Energy Information Administration (EIA), compared to just 2% in 1998. Large basins, known as the Barnett Shale, Fayetteville Shale, Mowry Shale, Marcellus Shale, and Utica Shale, are prominent examples.

The exploitation of tight reservoirs has been made possible by advancements in drilling techniques. Production techniques have indeed evolved from vertical wells to horizontal wells, reducing the number of production wells required and their footprint on the ground and making it possible to better cover the volume of the reservoir to recover as much gas or oil as possible. However, the permeabilities are insufficient for the hydrocarbon to migrate from the source rock to the well easily and enable an economic production of gas or oil. It is therefore necessary to increase the permeability of the reservoir and its production surfaces by stimulation operations and in particular by hydraulic fracturing.

### Hydraulic fracturing

Hydraulic fracturing, also referred to as fracing (or fracking), is used to initiate production in low-permeability reservoirs and re-stimulate production in older producing wells.

The purpose of hydraulic fracturing is to create additional permeability and generate larger gas or oil production surfaces. Indeed, the low permeability, the natural barriers of compact layers and the waterproofing by drilling operations strongly limit production. The gas or oil contained in the unconventional reservoir cannot easily migrate from the rock to the well without stimulation.

These hydraulic fracturing operations on horizontal wells began in the 1960s in Appalachia and, today, tens of thousands of operations have taken place in the United States.

### Stimulation of the reservoir by hydraulic fracturing

These operations consist of injecting water at high pressure and at very high flow rate so as to create fractures distributed perpendicularly to the production wells. The procedure is generally carried out in several steps in order to create fractures along the entire length of the horizontal well, which makes it possible to cover a maximum volume of the reservoir.

In order to keep these fractures open, a proppant (e.g. sand, plastics or calibrated ceramics) is added so as to prevent these fractures from closing and to maintain the capillarity created after the injection is stopped.

Water alone is insufficient to achieve an efficient proppant placement due to its low viscosity, which limits its ability to hold the proppant in place in the fractures. To solve this problem, fracturing fluids containing viscosifying compounds have been developed.

One major problem encountered, is the colossal energy required to inject with these viscosified fluid at extremely high pressures through long distance to create the fractures that leads to the rejection of an extremely high amount of CO₂.

Friction reducing polymers have been known and used in the preparation of fracturing fluid to reduce pump pressure and thus lower the energy requirement to inject the fracturing fluid. Friction reducer work by reducing the turbulence of a fluid by playing on the Reynolds number. Reynolds number is a dimensionless number characterizing the flow regime of a fluid. Adding a friction reducing polymer will reduce the Reynolds number resulting in a more laminar flow of the fracturing fluid and thus, increasing the overall efficiency of the process by considerably reducing the energy needed to the whole stimulation operation.

Friction reducing polymers have been designed to develop their effect rapidly and reach their peak efficiency within seconds. However, their performances drastically drop just after reaching this peak. To maintain the friction reduction effect throughout the injection system, a constant high dosage of polymer is required. This result in a high environmental impact due to the high dosage of polymer, and a more difficult flowback waters to treat.

The invention aims to provide a friction reducing polymer having extended friction reducing properties.

The friction reducing polymer of the invention is in line with the principle of environmental consciousness and the impact of industry and man on the planet. The friction reducing polymer allows better friction reducing effect over time thus allowing a reduction of the overall energy required for hydraulic fracturing operation and thus reduces the CO₂ emissions associated.

The present invention is advantageously carried out using materials of biological origin, such as biomass, or recycled materials. The synthesis of the monomer(s) used in the invention are advantageously a biological synthesis, for example, by enzymatic catalysis or extracted from renewable raw material. The energy used to carry out the method according to the invention is advantageously derived from a heat pump or of renewable origin, for example wind power, photovoltaics, or from fuel cell, lithium battery type or nuclear.

### SUMMARY OF THE INVENTION

The invention relates to a friction reducing polymer comprising:
- at least one hydrophilic monomer;
- at least one crosslinker;
the quantity of crosslinker in the friction reducing polymer being comprised between 0.5 and 50 ppm, based on the total weight of monomer(s) of the friction reducing polymer.

The present invention also relates to a fracturing fluid comprising the friction reducing polymer according to the invention.

The present invention also relates to a method for hydraulic fracturing of an underground oil or gas reservoir, said method comprising injecting into the underground oil or gas reservoir a fracturing fluid comprising at least one friction reducing polymer according to the invention.

Finaly, the present invention also relates to a method comprising putting in contact a fluid coming from wastewater management, mining industry, paper industry, agriculture, textile industry or drilling operation with the friction reducing polymer according to the invention.

### DESCRIPTION OF THE INVENTION

By "polymer" is meant a homopolymer or a copolymer. A homopolymer is a polymer composed of a single identical repeating unit, while a copolymer is composed of two or more different repeating units. Repeating units are selected from: non-ionic hydrophilic monomers, cationic hydrophilic monomers, anionic hydrophilic monomers, zwitterionic hydrophilic monomers and hydrophobic monomers.

By "monomer" is meant a compound with a single ethylenically unsaturated function.

By "water-soluble polymer" is meant a polymer that yields an aqueous solution without insoluble particles when it is dissolved under stirring at 25°C and with a concentration of 10 g.l⁻¹ in deionized water.

By "hydrophilic monomer" is meant a monomer which has a log (octanol/water partition coefficient), log(K_{ow}), of less than or equal to 1 determined at 25°C in an octanol/water mixture having a volume ratio of 1/1, at a pH between 6 and 8.

By "hydrophobic monomer" is meant a monomer which has a log (octanol/water partition coefficient), log(K_{ow}), greater than or equal to 1 determined at 25°C in an octanol/water mixture having a volume ratio of 1/1, at a pH between 6 and 8.

The octanol/water partition coefficient, K_{ow}, is defined as follows: ${K}_{ow} = \frac{{\left[monomer\right]}_{octanol}}{{\left[monomer\right]}_{water}}$ with: [monomer]octanol = equilibrium solubility concentration of the monomer in g/l in n- octanol $\left[monomer\right] water = equilibrium concentration of the monomer in g / l in water .$

As used herein, the expression "A and/or B" means "A, or B, or A and B".

Furthermore, where ranges of values are indicated, the end-values are part of these ranges. The disclosure also includes all combinations between the end-values of these ranges. For example, ranges "1-20, preferably 5-15", imply disclosure of the ranges "1-5", "1-15", "5-20" and "15-20".

The molecular weight, of the different polymer described below, is determined by the intrinsic viscosity of the polymer. Intrinsic viscosity can be measured by methods known to those skilled in the art and can be calculated from reduced viscosity values for different polymer concentrations by a graphical method consisting of plotting reduced viscosity values (y-axis) against concentration (x-axis) and extrapolating the curve to zero concentration. The intrinsic viscosity value is plotted on the y-axis or using the least-squares method. The molecular weight can then be determined by the Mark-Houwink equation: $\left[η\right] = {KM}^{α}$

**[η]** represents the intrinsic viscosity of the polymer as determined by the solution viscosity method.

**K** represents an empirical constant.

**M** represents the molecular weight of the polymer.

**α** represents the Mark-Houwink coefficient.

**K** and **α** depend on the particular polymer-solvent system.

All the particular and/or preferred embodiments described in the invention are combinable, provided they are not incompatible.

### Friction reducing polymer

The friction reducing polymer comprises:
- at least one hydrophilic monomer;
- at least one crosslinker;
the quantity of crosslinker in the friction reducing polymer being comprised between 0.5 and 50 ppm, based on the total weight of monomer(s) of the friction reducing polymer.

The friction reducing polymer is advantageously water-soluble.

The hydrophilic monomers used to prepare the friction reducing polymer are selected from: non-ionic hydrophilic monomers, cationic hydrophilic monomers, anionic hydrophilic monomers, zwitterionic hydrophilic monomers.

Advantageously, the non-ionic hydrophilic monomer(s) used in the invention are selected from the group consisting of: acrylamide, methacrylamide, N-alkylacrylamides, N-alkylmethacrylamides, N,N-dialkyl acrylamides (for example, N,N-dimethylacrylamide or N,N-diethylacrylamide), N,N-dialkylmethacrylamides, acrylic acid alkoxyl esters, methacrylic acid alkoxyl esters, N-vinylpyrrolidone, N-methylol(meth)acrylamide, N-vinyl caprolactame, N-vinylformamide (NVF), N-vinyl acetamide, N-vinyl imidazole, N-vinyl succinimide, acryloyl morpholine (ACMO), glycidyl methacrylate, vinyl acetate, glyceryl methacrylate, diaketone acrylamide, methacrylic anyhydride, acrylonitrile, maleic anydride, itaconic anhydride, itaconamide, hydroxyalkyl (meth)acrylate, thioalkyl (meth)acrylate, isoprenol and its alcoxyl derivatives, hydroxyethyl(meth)acrylates and their alcoxyl derivatives, hydroxypropyl(meth)acrylate and its alcoxyl derivatives, and mixtures thereof. Among these non-ionic monomers, the alkyl groups are advantageously C₁-C₅, more advantageously, C₁-C₃. Preferably, the non-ionic hydrophilic monomer is acrylamide.

The friction reducing polymer advantageously comprises between 20 and 100 mol% of hydrophilic non-ionic monomer(s), preferably between 40 and 99 mol%, more preferably between 50 and 95 mol%.

The cationic hydrophilic monomer(s) used in the invention are selected from vinyl-type monomers, in particular acrylamide derivatives, acrylic derivatives, allylic derivatives or maleic derivatives having a protonable amine function or an ammonium group, advantageously a quaternary ammonium group. Preferably, the at least cationic hydrophilic monomer is selected from the group consisting of: diallyldialkyl ammonium salts like dimethyldiallylammonium chloride (DADMAC); acidified or quaternized dialkyl- aminoalkyl(meth)acrylamide salts, like for example (3-methacrylamidopropyl)trimethylammonium chloride (MAPTAC), (3-acrylamidopropyl)trimethylammonium chloride (APTAC); acidified or quaternized dialkyl-aminoalkyl acrylate salts like quaternized or salified dimethylaminoethyl acrylate (DMAEA); acidified or quaternized dialkyl aminoalkyl methacrylate salts like quaternized or salified dimethylaminoethyl methacrylate (DMAEMA); acidified or quaternized N,N-dimethylallylamine salts; acidified or quaternized diallylmethylamine salts; acidified or quaternized diallylamine salts; vinylamine obtained by hydrolysis (basic or acid) of an amide group -N(R²)-CO-R¹ with R¹ and R² being, independently, a hydrogen atom or an alkyl chain of 1 to 6 carbons, for example vinylamine coming from the hydrolysis of vinylformamide; vinylamine obtained by Hofmann degradation; and mixtures thereof can be mentioned. Advantageously, the alkyl groups are C₁-C₇, preferably C₁-C₃ and can be linear, cyclic, saturated or unsaturated chains. Preferably, the cationic hydrophilic monomer is selected from the group consisting of quaternized or salified dimethylaminoethyl acrylate (DMAEA), quaternized or salified dimethylaminoethyl methacrylate (DMAEMA), and mixtures thereof. More preferably, it is quaternized or salified dimethylaminoethyl acrylate (DMAEA).

The friction reducing polymer comprises between 0 and 80 mol% of hydrophilic cationic monomer(s), preferably between 1 and 60 mol%, more preferably between 5 and 50 mol%.

The skilled person in the art will know how to prepare quaternized monomers, for example by means of an R-X-type quaternization agent, R being an alkyl group and X being a halogen or a sulphate.

A "quaternization agent" means a molecule being able to alkylate a tertiary amine.

The quaternization agent can be selected from dialkyl sulphates comprising 1 to 6 carbon atoms or alkyl halides comprising 1 to 6 carbon atoms. Preferably, the quaternization agent is selected from the group consisting of methyl chloride, benzyl chloride, dimethyl sulphate, diethyl sulphate, and mixtures thereof.

In addition, the present invention also covers DADMAC-, APTAC- and MAPTAC-type monomers, the counter-ion of which is a sulphate, a fluoride, a bromide or an iodide instead of chloride.

Advantageously, the anionic hydrophilic monomer(s) used in the invention are selected from monomers having a vinyl function, in particular, acrylic, sulfonic, maleic, fumaric, itaconic, or allylic. They can also contain a carboxylate, phosphonate, phosphate, sulfonate, sulphate group, or another anionic charge group. Preferred monomers belonging to this class are, for example, acrylic acid; methacrylic acid; dimethylacrylic acid; itaconic acid; C₁-C₃ itaconic acid hemi-esters; acryloyl chloride; crotonic acid; maleic acid; fumaric acid; 3-acrylamido 3-methylbutanoic acid; strong acid-type monomers having, for example, a sulphonic acid- or phosphonic acid-type function, such as vinylsulphonic acid, vinylphosphonic acid, allylsulphonic acid, methallylsulphonic acid, 2-methylidenepropane-1,3-disulphonic acid, 2-sulfoethylmethacrylate, sulfopropylmethacrylate, sulfopropylacrylate, allylphosphonic acid, ethylene glycol methacrylate phosphate, sulphonic styrene acid, 2-acrylamido-2-methylpropane sulphonic acid (ATBS), 2-acrylamido-2-methylpropane disulphonic acid, 3-allyloxy-2-hydroxypropane sulphonic acid, diethylallylphosphonate, carboxyethyl acrylate; water-soluble salts of these monomers, like their alkaline metal salts, alkaline earth metals, or ammonium; and mixtures thereof. Preferably, the anionic hydrophilic monomer is acrylic acid or a salt thereof.

The friction reducing polymer comprises between 0 and 80 mol% of hydrophilic anionic monomer(s), preferably between 1 and 60 mol%, more preferably between 5 and 50 mol%.

In an embodiment, the anionic hydrophilic monomer(s) can be partially or totally salified.

By "salified", is meant the substitution of a proton of at least one acid function of the - R^{a}(=O)-OH type (with R^{a} representing P, S or C) of the anionic monomer by a metal or ammonium cation to form a salt of the -R^{a}(=O)-OX type (X being a metal cation or an organic cation). In other words, the non-salified form corresponds to the acid form of the monomer, for example R^{b}-C(=O)-OH in the case of the carboxylic acid function, while the salified form of the monomer corresponds to the R^{b}-C(=O)-O⁻ X⁺ form, X⁺ corresponding to an alkaline cation or an organic cation. The salification of the acid functions can be partial or total.

The salified form advantageously corresponds to the alkaline metal salts (Li, Na, K, etc.), alkaline earth metal salts (Ca, Mg, etc.) or ammonium salts (for example, ammonium ion or a tertiary ammonium), or mixtures thereof. The preferred salts are sodium salts.

The salification can be done, partially or totally, before, during or after polymerization.

In an embodiment, between 1 and 100 mol% of the anionic hydrophilic monomer(s) are in salified form, preferably between 10 and 90 mol%.

Advantageously, the zwitterionic hydrophilic monomers used are selected from derivatives of a vinyl-type pattern (advantageously acrylamide, acrylic, allylic or maleic).

Preferably, this monomer comprises an amine or ammonium function (for example, quaternary ammonium) and a carboxylic (or carboxylate)-, sulphonic (or sulfonate)- or phosphoric (or phosphate)-type acid function.

The zwitterionic hydrophilic monomers are advantageously selected from the group consisting of dimethylaminoethyl acrylate derivatives can be mentioned, such as 2 - ((2-9 (acryloyloxy) ethyl) dimethylammonio) ethane-1-sulfonate, 3 - ((2- (acryloyloxy) ethyl) dimethylammonio) propane-1-sulfonate, 4 - ((2- (acryloyloxy) ethyl) dimethylammonio) butane-1-sulfonate, [2- (acryloyloxy) ethyl] (dimethylammonio) acetate, derivatives of dimethylaminoethyl methacrylate such as 2 - ((2- (methacryloyloxy) ethyl) dimethylammonio) ethane-1-sulfonate, 3 - ((2- (methacryloyloxy) ethyl) dimethylammonio) propane-1-sulfonate, 4 - ((2 - (methacryloyloxy) ethyl) dimethylammonio) butane-1-sulfonate, [2- (methacryloyloxy) ethyl] (dimethylammonio) acetate, derivatives of dimethylamino propylacrylamide such as 2 - ((3-acrylamidopropyl) dimethylammonio) ethane-1- sulfonate, 3 - ((3-acrylamidopropyl) dimethylammonio) propane-1-sulfonate, 4 - ((3-acrylamidopropyl) dimethylammonio) butane-1-sulfonate, [3- (acryloyl) oxy) propyl] (dimethylammonio) acetate, dimethylamino propyl methylacrylamide, or also derivatives such as 2 - ((3-methacrylamidopropyl) dimethylammonio) ethane-1-sulfonate, 3 - (dimethylammonio) propane-1-sulfonate 4 - ((3-methacrylamidopropyl) dimethylammonio) butane-1-sulfonate and propyl [3-(methacryloyloxy)] (dimethylammonio) acetate and mixtures thereof.

Other zwitterionic hydrophilic monomers can be used, in particular those described by the Applicant in document WO2021/123599.

The quantity of polymerized zwitterionic hydrophilic monomer is advantageously less than 30 mol% based on the total molar quantity of polymerized monomers, preferably less than 10 mol%.

In a preferred embodiment, the friction reducing polymer is free of zwitterionic hydrophilic monomers.

In an embodiment, the polymerization of the friction reducing polymer may involve one or more hydrophobic monomers.

Advantageously the monomer(s) having a hydrophobic character used are selected from the group consisting of (meth)acrylic acid esters having a (i) C₄-C₃₀ alkyl chain or (ii) arylalkyl (C₄-C₃₀ alkyl, C₄-C₃₀ aryl), or (iii) propoxylated, or (iv) ethoxylated, or (v) ethoxylated and propoxylated; sulfonated alkyl aryl (C₄-C₃₀ alkyl, C₄-C₃₀ aryl); the mono- or di-substituted (meth)acrylamide amides having a (i) C₄-C₃₀ alkyl chain, or (ii) arylalkyl (C₄-C₃₀ alkyl, C₄-C₃₀ aryl), or (iii) propoxylated, or (iv) ethoxylated, or (v) ethoxylated and propoxylated; anionic or cationic (meth)acrylamide or (meth)acrylic acid monomer derivatives carrying a hydrophobic chain; and mixtures thereof. Hydrophobic monomers can comprise halogen atoms, for example, chlorine.

Among these hydrophobic monomers:
- the alkyl groups are preferably C₄-C₂₀, more preferably C₄-C₈. The C₆-C₂₀ alkyls are preferably linear alkyls, while the C₄-C₅ alkyls are preferably branched,
- the arylalkyl groups are preferably C₇-C₂₅, more preferably C₇-C₁₅,
- the ethoxylated chains advantageously comprise between 1 and 200 -CH₂-CH₂-O-groups, preferably between 6 and 100, more preferably between 10 and 40,
- the propoxylated chains advantageously comprise between 1 and 50 -CH₂-(CH₃)CH-O-groups, more preferably between 1 and 20.

Preferred hydrophobic monomers belonging to these classes are, for example:
- n-hexyl (meth)acrylate, n-octyl (meth)acrylate, oxtyl (meth)acrylamide, lauryl (meth)acrylate, lauryl (meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylate, erucyl (meth)acrylamide, N-tert-Butyl(meth)acrylamide, vinylpyridine, 2-ethylhexyle acrylate, C₄-C₂₂ itaconic acid hemi-esters, C₄-C₂₂ acidified or quaternized dialkyl aminoalkyl (meth)acrylate salts, C₄-C₂₂ acidified or quaternized dialkyl aminoalkyl (meth)acrylamide salts, undecanoic acrylamido acid, and mixtures thereof,
- the allyl cationic derivatives of formula (I) or (II): 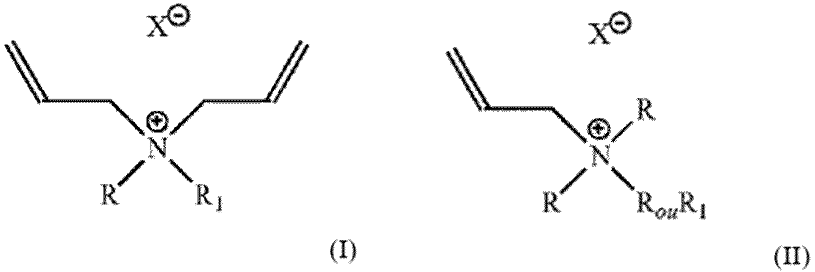 wherein:
   R represents independently an alkyl chain containing 1 to 4 carbons;
   R₁ represents an alkyl or arylalkyl chain containing 8 to 30 carbons;
   X represents
- a halide selected from: bromide, chloride, iodide, fluoride; or
- a carboxylate-type organic anion, e.g. acetate, citrate, lactate or formate; or
- an inorganic anion, e.g. sulfate, nitrate or phosphate. 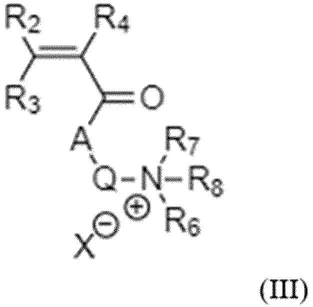 wherein:
- A represents O or N-R₅ (preferably A represents N-R₅),
- R₂, R₃, R₄, R₅, R₆, R₇ represent independently a hydrogen atom or an alkyl chain containing 1 to 4 carbons (R₂ and R₃ are preferably hydrogen atoms),
- Q represents an alkyl chain containing 1 to 20 carbons,
- R₈ represents an alkyl or arylalkyl chain containing 8 to 30 carbons,
- X represents
- a halide selected from: bromide, chloride, iodide, fluoride; or
- a carboxylate-type organic anion, e.g. acetate, citrate, lactate or formate; or
- an inorganic anion, e.g. sulfate, nitrate or phosphate.

The friction reducing polymer advantageously comprises less than 5 mol% of hydrophobic monomers.

When the friction reducing polymer is water-soluble and comprises hydrophobic monomer, they are present in a quantity such that the friction reducing polymer remains soluble in water.

In a preferred embodiment, the friction reducing polymer is free of hydrophobic monomers.

The quantities of the different monomers will be adjusted by the skilled person in the art, in order to not exceed 100 mol% during the preparation of the friction reducing polymer.

The friction reducing polymer can be non-ionic, cationic, anionic or amphoteric. Preferably it is anionic.

By "non-ionic" is meant a friction reducing polymer that contains only non-ionic hydrophilic monomer(s).

By "cationic" is meant a friction reducing polymer having an overall positive charge due to the presence of cationic hydrophilic monomer(s), it can optionally comprise non-ionic hydrophilic monomer.

By "anionic" is meant a friction reducing polymer having an overall negative charge due to the presence of anionic hydrophilic monomer(s), it can optionally comprise non-ionic hydrophilic monomer.

By "amphoteric" is meant a friction reducing polymer with at least one cationic hydrophilic monomer and anionic hydrophilic monomer.

In a particular embodiment, the friction reducing polymer may comprise at least one LCST group.

According to the general knowledge of the person skilled in the art, an LCST group corresponds to a group whose solubility in water for a given concentration is modified above a certain temperature and as a function of salinity. This is a group with a heating transition temperature defining its lack of affinity with the solvent medium. Lack of affinity with the solvent results in opacification or loss of transparency, which may be due to precipitation, aggregation, gelation or viscosification of the medium. The minimum transition temperature is known as the LCST (Lower Critical Solution Temperature). For each group concentration at LCST, a heating transition temperature is observed. This is above the LCST, which is the minimum point on the curve. Below this temperature, the friction reducing polymer is soluble in water; above this temperature, the friction reducing polymer loses its solubility in water.

In a particular embodiment, the friction reducing polymer may comprise at least one UCST group.

According to the general knowledge of the person skilled in the art, a UCST group corresponds to a group whose solubility in water, for a given concentration, is modified below a certain temperature and as a function of salinity. It is a group with a cooling transition temperature defining its lack of affinity with the solvent medium. Lack of affinity with the solvent results in opacification or loss of transparency, which may be due to precipitation, aggregation, gelation or viscosification of the medium. The maximum transition temperature is called UCST (Upper Critical Solution Temperature). For each cluster concentration at UCST, a cooling transition temperature is observed. This is below the UCST, which is the maximum point on the curve. Above this temperature, the friction reducing polymer is soluble in water; below this temperature, the friction reducing polymer loses its solubility in water.

In a particular embodiment, the friction reducing polymer can be partially or totally post-hydrolyzed.

Post-hydrolysis is the hydrolysis reaction of the friction reducing polymer after its formation by polymerization of monomer(s). This step consists in the reaction of hydrolyzable functional groups of monomers advantageously non-ionic, more advantageously the amide or ester functions, with a hydrolysis agent. This hydrolysis agent may, for example, be an enzyme, an ion exchange resin, or a Brønsted acid metal (e.g. a hydrohalic acid) or a Brønsted base (e.g. an alkali hydroxide or an alkaline earth hydroxide. Preferably, the hydrolysis agent is a Brønsted base. During this post-hydrolysis stage, the number of carboxylic acid functions increases. Indeed, the reaction between the base and the amide or ester functions present in the friction reducing polymer produces carboxylate groups.

The friction reducing polymer comprises at least one crosslinker.

The crosslinker is advantageously selected from the group consisting of:
- structure agents, being selected from the group consisting of water soluble polyethylenic unsaturation compounds (having, as a minimum, two unsaturated functions), like for example vinyl functions, in particular (meth)allylic, (meth)acrylamide or (meth)acrylic, and for example, diacrylamide, di (meth)acrylate esters, tri (meth)acrylate esters such as ethoxylated trimethylol (9-20) triacrylate, tetra (meth)acrylate esters, ethylene glycol diacrylate, polyethylene glycol diacrylate, trimethylopropane trimethacrylate, ethoxylated trimethylol triacrylate, ethoxylated pentaerythritol tetracrylate, vinyl or allyl esters of di- or trifunctional acids, polyfunctional vinyl derivatives of a polyalcohol, N,N'-methylene bis acrylamide (MBA), triallyamine, tetraallylammonium chloride (TAAC) or 1,2 dihydroxyethylene bis-(N-acrylamide), trimethylolpropane triacrylate, divinylbenzene, triallylisocyanurate (TAIC);
- compounds having at least two epoxy functions;
- compounds having at least one unsaturated function and one epoxy function for example allyl glycidyl ether;
- macroinitiators such as polyperoxides, polyazoics and polyols;
- functionalized polysaccharides;
- water-soluble metal complexes composed of:
   * a valence metal greater than or equal to 3, such as, as an example and in a non-limiting manner, aluminum, boron, zirconium or also titanium, and
   * a ligand carrying a hydroxyl function can be mentioned.

Examples of diacrylates are polyethylene glycol diacrylate (PEG diacrylate): PEG 200 diacrylate, PEG 400 diacrylate, PEG 600 diacrylate, PEG 1000 diacrylate; ethylene glycol diacrylate; diethylene glycol diacrylate; triethylene glycol diacrylate; tetraethylene glycol diacrylate.

In a preferred embodiment, the crosslinker is selected from the group consisting of: N,N'-methylene bis acrylamide (MBA), triallylamine, tetraallylammonium chloride, polyethylene glycol diacrylate (PEG diacrylate), allyl pentaerythritol, allyl glycidyl ether, trimethylolpropane triacrylate, divinylbenzene, triallyl isocyanurate.

The quantity of crosslinker is comprised between 0.5 and 50 ppm, based on the total weight of monomer(s) of the friction reducing polymer, preferably between 1 and 20 ppm and more preferably between 1 and 10 ppm.

In a preferred embodiment, the friction reducing polymer comprises at least one transfer agent.

The transfer agent is advantageously selected from the group consisting of: methanol; isopropyl alcohol; sodium hypophosphite; calcium hypophosphite; magnesium hypophosphite; potassium hypophosphite; ammonium hypophosphite; formic acid; sodium formate; calcium formate; magnesium formate; potassium formate; ammonium formate; 2-mercaptoethanol; 3-mercaptopropanol; glycol dithiopropylene; thioglycerol; thioglycolic acid; thiohydroacrylic acid; thiolactic acid; thiomalic acid; cysteine; aminoethanethiol; thioglycolates; allyl phosphites; allyl mercaptans, like n-dodecyl mercaptan; sodium methallylsulfonate; calcium methallylsulfonate; magnesium methallylsulfonate; potassium methallylsulfonate; ammonium methallylsulfonate; alkyl phosphites like tri alkyl (C₁₂-C₁₅) phosphites, di-oleyl-hydrogenophosphites, dibutyl phosphite; dialkyldithiophosphates like dioctyl phosphonate; tertiary nonylmercaptan; 2-ethylhexyl thioglycolate; n-octyl mercaptan; n-dodecyl mercaptan; tert-dodecyl mercaptan; iso-octylthioglycolate; 2-ethylhexyl thioglycolate; 2-ethylhexyl mercaptoacetate; polythiols; and mixtures thereof. Preferably, this is sodium hypophosphite or sodium formate.

In an embodiment, the transfer agent is a polytransfer agent, such as a polymercaptan polymer.

The quantity of transfer agent comprised in the friction reducing polymer is advantageously comprised between 0.1 and 50 ppm, based on the total weight of monomer(s) of the friction reducing polymer, preferably between 0.5 and 20 ppm, more preferably between 1 and 10 ppm.

The ratio by weight between the transfer agent and the crosslinker is advantageously comprised between 1:50 and 1: 10, preferably between 1:25 and 1:7, more preferably between 1: 10 and 1:5.

The friction reducing polymer has advantageously a molecular weight of between 1 million and 50 million g/mol, preferably of between 2 million and 40 million g/mol, more preferably of between 5 million and 30 million g/mol and even more preferably of between 10 million and 25 million g/mol.

In a preferred embodiment, the constituents of the friction reducing polymer originate from a raw materials comprising at least partially renewable and non-fossil origin.

By "constituents" is meant the monomer(s), the crosslinker and the optional transfer agent.

In the context of the invention, the terms "of renewable and non-fossil origin" designate the origin of a chemical compound issuing from biomass or synthetic gas (syngas), namely, one that is the result of one or more chemical transformations performed on one or more raw materials of natural, and non-fossil, origin. The terms "bio-sourced" or "bio-resourced" can also be used to characterize the renewable and non-fossil origin of a chemical compound. The renewable and non-fossil origin of a compound includes renewable and non-fossil raw materials coming from the circular economy, and which have been previously recycled, one or more times, during a recycling process of material coming from biomass, such as, for example, material coming from polymer depolymerization or from the transformation of pyrolysis oil.

According to the invention, "at least partially of renewable and non-fossil origin" means a content of bio-sourced carbon comprised between 5% by weight and 100% by weight based on to the total carbon weight of said compound, preferably at least 30%, more preferably at least 50%, even more preferably at least 70%, more preferably at least 90% and even more preferably 100% bio-sourced carbon.

In the context of the invention, the standard ASTM D6866-21, method B, is used to characterize the bio-sourced nature of a chemical compound, and to determine the bio-sourced content of said compound. The value is expressed in percent by weight of bio-sourced carbon based on to the total weight of carbon in said compound.

The ASTM D6866-21 standard is a test method that teaches how to experimentally measure the bio-sourced carbon content of solids, liquids and gaseous samples by radiocarbon analysis.

In a preferred embodiment, between 5 and 100 wt% of the friction reduction polymer carbon atoms originate from a raw material comprising recycled material or materials of biological origin, wherein said carbon atoms are measured in accordance with ASTM D6866-21, Method B.

In a particularly preferred embodiment, 100 wt% of the carbon atoms of the friction reducing polymer originate from a raw material comprising recycled material or materials of biological origin, the biobased carbon content is measured in accordance with ASTM D6866-21, Method B.

### Preparation of the friction reducing polymer

The friction reducing polymer can be obtained according to any polymerization techniques well-known by a person skilled in the art. In particular, this can be polymerization in solution: polymerization in gel; polymerization by precipitation; polymerization in emulsion (aqueous or inverse); polymerization in suspension; polymerization by reactive extrusion; water-in-water polymerization; or micellar polymerization. Preferably, the polymerization is an inverse polymerization in emulsion or a water-in-water polymerization, more preferably, this is an inverse polymerization in emulsion.

The polymerization is a free radical-controlled radical polymerization. By free radical polymerization, free radical polymerization by means of UV, azoic, redox or thermal initiators are included, as well as controlled radical polymerization (CRP) techniques or on-matrix polymerization techniques.

In a preferred embodiment, the friction reducing polymer is not obtained by controlled radical polymerization techniques.

### Polymerization in inverse emulsion

The expression "inverse emulsion" means both inverse emulsions and inverse microemulsions. These are water-in-oil-type emulsions, wherein the aqueous phase is dispersed in the lipophilic phase in the form of drops or droplets.

An inverse emulsion consists of a two-phase medium. It can be unstable in the absence of surfactant (the surfactants group gather water-in-oil-type emulsifying agents and oil-in-water emulsifying agents). Under stirring, hydrophilic phase particles are observed, dispersed in a lipophilic phase, having a wide size distribution around an average which can be around one micrometer. During an inverse emulsion polymerization, the monomer is dispersed in large droplets of the emulsion (diameter: around 50 nm to 10 µm), as well as in small emulsifying micelles (diameter: around 5 to 10 nm).

This polymerization technique is well-known to a person skilled in the art. It consists of putting a hydrophilic phase in emulsion comprising one or more monomers in a lipophilic phase. This emulsification is done thanks to a water-in-oil emulsifying agent.

An inverse emulsion generally comprises at least:
- an hydrophilic phase comprising at least one hydrophilic monomer;
- a lipophilic phase;
- at least one water-in-oil emulsifying agent;
- optionally, an oil-in-water emulsifying agent.

A "water-in-oil emulsifying agent" means a compound capable of emulsifying water in an oil and an "oil-in-water emulsifying agent" is a compound capable of emulsifying an oil in water. Generally, it is considered that an emulsifying agent of the water-in-oil type is a surfactant having an HLB strictly less than 8, and that an oil-in-water emulsifying agent is a surfactant having an HLB greater than or equal to 10. A surfactant having an HLB of between 8 and 10 is considered as a wetting agent. A person skilled in the art can refer to the document, "Handbook of Applied Surface and Colloid Chemistry" by K. Holmberg, Chapter 11, if needed.

The hydrophilic-lipophilic balance (HLB) of a chemical compound is a measurement of its hydrophilic and/or lipophilic properties, determined by calculating the values for the different regions of the molecule, such as described by Griffin in 1949.

In the present invention, the Griffin method has been adopted, based on calculating a value based on the chemical groups of the molecule. Griffin has attributed a dimensionless number between 0 and 20 to give information on the solubility of water and oil.

The HLB value of a substance having a total molecular mass M and a hydrophilic part of a molecular mass Mh is given by:
HLB = 20 (Mh/M).

The hydrophilic phase of the emulsion is advantageously water.

The lipophilic phase of the emulsion can be a mineral oil, a vegetable oil, a synthetic oil or a mixture of several of these oils. Preferably the lipophilic phase is a vegetable oil.

Examples of mineral oil are mineral oils containing saturated or unsaturated hydrocarbons of the aliphatic-, naphtenic-, paraffin-, isoparaffin-, cycloparaffin- or naphtyl-type.

Examples of vegetable oils are squalene, an ester- or triglyceride-type oil, like coco caprylate/caprate, octyldodecyl myristate, ethoxylated vegetable oils, jojoba oil, macadamia oil.

Examples of synthetic oil are hydrogenated polydecene or hydrogenated polyisobutene, esters such as oxtyl stearate or butyl oleate. The range of Exxsol^{™} products from Exxon Mobil are perfectly suitable.

The water-in-oil emulsifying agent is advantageously selected from the group consisting of: polyesters having a molecular weight of between 1000 and 3000 g/mol; condensation products between a succinic poly(isobutenyl) acid or its anhydride and a glycol polyethylene; sequenced block polymers having a molecular weight of between 2500 and 3500 g/mol, like for example those sold under Hypermer^{®} names; sorbitan extracts, such as monooleate or sorbitan polyoleates, polyethoxylated sorbitan esters; diethyoxyl oleocetylic alcohol; tetraethoxyl laurylacrylate; fatty alcohol condensation products greater than ethylene, like an oleic alcohol reaction product with 2 ethylene oxide units; alkylphenol and ethylene oxide condensation products, such as the nonyl phenol reaction product with 4 ethylene oxide units. Ethoxyl fatty amines such as Witcamide^{®} 511, alkyl phosphate esters, betaine-based products and ethoxyl amine are also good candidates as emulsifying agents of the water-in-oil type.

The quantity of water-in-oil emulsifying agent in the inverse emulsion is advantageously between 0.5 and 10% by weight based on the total weight of the inverse emulsion, preferably between 0.75 and 8% by weight, more preferably between 1 and 5% by weight.

In a preferred embodiment, the water-in-oil emulsifying agent originates from a raw material comprising at least partially renewable and non-fossil origin.

The water-in-oil emulsifying agents originating from a raw material comprising at least partially renewable and non-fossil origin is selected from sorbitan esters, such as sorbitan monooleate (Span 80) or sorbitan monostearate (Span 60), polyglyceryl esters, such as polyglyceryl-4 oleate or polyglyceryl-6 dioleate, lecithins with low HLB (≤7) derived from vegetable sources like soy lecithin, sunflower lecithin, alkyl phosphate esters having fatty acids derived from vegetable sources like coconut, palm, sunflower, rapeseed, olive, soybean or from animal sources like beef, pork, fish, and sucrose esters like sucrose distearate or sucrose dipalmitate..

The method of the invention can comprise the addition of at least one oil-in-water emulsifying agent.

The oil-in-water emulsifying agent(s) are advantageously selected from the group consisting of ethoxylated nonylphenol, preferably having 4 to 10 ethoxylations (i.e. preferably having an ethoxylation degree going from 4 to 10); ethoxylated/propoxylated alcohols preferably having an ethoxylation/propoxylation comprising 12 to 25 carbon atoms; ethoxylated tridecyl alcohols; ethoxylated/propoxylated fatty alcohols; ethoxylated sorbitan esters (advantageously having 20 ethylene oxide molar equivalents); polyethoxylated sorbitan laurate (advantageously having 20 ethylene oxide molar equivalents); polyethoxylated castor oil (advantageously having 40 ethylene oxide molar equivalents); decaethoxylated oleodecyclic alcohol; hepta oxyethylated lauric alcohol; polyethoxylated sorbitan monostearate (advantageously having 20 ethylene oxide molar equivalents); cetyl ether polyethoxylated phenol alkyls (advantageously having 10 ethylene oxide molar equivalents); aryl ether alkyl ethylene polyoxides; N-cetyl-N-ethyl morpholinium ethosulfate; sodium sulfate lauryl; fatty alcohol condensation products with ethylene oxide (advantageously having 10 ethylene oxide molar equivalents); alkylphenol and ethylene oxide condensation products (advantageously having 12 oxide ethylene molar equivalents); fatty amine condensation products with 5 molar equivalent or more ethylene oxide (advantageously 5 to 50 equivalents); ethoxylated phenol tristyryl, condensates of ethylene oxide with partially esterified polyhydric alcohols with fatty chains, as well as their anhydrous forms; amine oxides advantageously having alkyl polyglucosides; glucamide; phosphate esters; sulphonic alkylbenzene acids and their salts; and surfactant block polymers and mixtures thereof. The alkyl groups of these oil-in-water-type emulsifying agents mean linear or branched groups and advantageously having 1 to 20 carbon atoms, more advantageously 3 to 15 carbon atoms. Furthermore, the aryls of these oil-in-water-type emulsifying agents, advantageously comprising 6 to 20 carbon atoms, more advantageously 6 to 12 carbon atoms.

Generally, the inverse emulsion comprises between 0.5 and 5% by weight of oil-in-water emulsifying agent based on the total weight of the inverse emulsion.

In a preferred embodiment, the oil-in-water emulsifying agent originates from a raw material comprising at least partially renewable and non-fossil origin.

The oil-in-water emulsifying agents originating from a raw material comprising at least partially renewable and non-fossil origin is selected from polysorbates (Tweens), such as polysorbate 20 (Tween 20) or polysorbate 80 (Tween 80), polyglyceryl esters, such as polyglyceryl-3 stearate or polyglyceryl-10 laurate, ethoxylated fatty alcohols, such as ceteareth-20 or laureth-4, modified lecithins with high HLB (≥10) derived from vegetable sources like enzymatically or chemically modified soy lecithin, sucrose esters, such as sucrose monostearate or sucrose monopalmitate, and alkyl phosphate esters having fatty acids derived from vegetable sources like coconut, palm, sunflower, rapeseed, olive, soybean or from animal sources like beef, pork, fish.

The oil-in-water emulsifying agent(s) can be added before, during or after polymerization. Preferably, the oil-in-water emulsifying agent(s) are added after polymerization.

The ratio by weight between the hydrophilic phase and the lipophilic phase in the inverse emulsion is advantageously between 50/50 and 90/10, preferably between 60/40 and 85/15, more preferably between 70/30 and 80/20.

The inverse emulsion advantageously comprises between 20 and 55% by weight of friction reducing polymer based on the total weight of the inverse emulsion, preferably between 30 and 45% by weight.

In a particularly preferred embodiment, the constituents of the friction reducing polymer, the lipophilic phase, the water-in-oil emulsifying agents and the oil-in-water emulsifying agent originate from a raw material comprising at least partially renewable and non-fossil origin.

In a particular embodiment, the inverse emulsion can be distilled to increase the quantity of ratio of friction reducing polymer in the inverse emulsion.

In a particular embodiment, the inverse emulsion is dried to obtain a powder of friction reducing polymer.

The drying of the inverse emulsion can be made by, for example, spray drying, vacuum drying, freeze drying.

### Fracturing fluid

The present invention also relates to a fracturing fluid comprising:
i) an aqueous phase;
ii) at least one proppant. and
iii) at least one friction reducing polymer comprising:
   - at least one hydrophilic monomer;
   - at least one crosslinker;
the quantity of crosslinker in the friction reducing polymer being comprised between 0.5 and 50 ppm, based on the total weight of monomer(s) of the friction reducing polymer.

The hydrophilic phase is advantageously chosen from sea water, brine and fresh water. Preferably the aqueous phase is brine.

The hydrophilic phase generally represents between 60 and 99,9% by weight of the total weight of the fracturing fluid, preferably between 70 and 99% by weight.

The brine is a solution comprising water and organic or inorganic salts. The salts may include monovalent salts, divalent salts, trivalent salts and mixtures thereof.

Advantageously, the brine comprises at least 1 000 mg/L of salts, preferably at least 5 000 mg/L, more preferably at least 10 000 mg/L, even more preferably at least 50 000 mg/L and even more preferably the brine is saturated with salts.

The proppant may be chosen from a non-restrictive list comprising sand, ceramics, bauxite, glass beads and resin-impregnated sand.

Advantageously, the quantity of proppant in the fracturing fluid is between 0.5 and 40% by weight relative to the total weight of the fracturing fluid, preferably between 1 and 25%, and more preferably between 1.5 and 20%.

Advantageously, the fracturing fluid comprises between 0.001% and 1% by weight of friction reducing polymer relative to the total weight of the fracturing fluid, preferably between 0.002% and 0.2%.

The fracturing fluid may comprise other compounds known to a person skilled in the art, such as those cited in document SPE 152596, for example:
- clay anti-swelling agents such as potassium chloride or choline chloride, and/or
- biocides for preventing the development of bacteria, in particular sulphate-reducing bacteria, which can form viscous masses reducing the passage surfaces. Examples include glutaraldehyde, which is the most used, or indeed formaldehyde or the isothiazolinones, and/or
- oxygen reducers such as ammonium bisulphite for preventing the destruction of the other components by oxidation and corrosion of the injection tubes, and/or
- anti-corrosion additives for protecting the tubes from oxidation by residual quantities of oxygen, with N,N dimethylformamide being preferred, and/or
- lubricants such as oil distillates, and/or
- iron chelating agents such as citric acid, EDTA (ethylenediaminetetraacetic acid), phosphonates, and/or
- antiscaling agents such as phosphates, phosphonates, polyacrylates or ethylene glycol.

Before being used in the fracturing fluid, the friction reducing polymer according to the invention may be in various forms. Preferably, it is in the form of powder, a water-in-oil inverse emulsion, an aqueous multiphase particulate suspension, or an oily multiphase particulate suspension.

In a preferred embodiment, the fracturing fluid comprises a second friction reducing polymer different from the friction reducing polymer according to the invention.

The second friction reducing polymer is preferably free of crosslinker.

The monomer(s) of the second friction reducing polymer can be chosen from the monomer described for the preparation of the friction reducing polymer according to the invention.

The second friction reducing polymer has advantageously a molecular weight of between 1 million and 50 million g/mol, preferably of between 2 million and 40 million g/mol, more preferably of between 5 million and 30 million g/mol and even more preferably of between 10 million and 25 million g/mol..

The ratio between the friction reducing polymer according to the invention and the second friction reducing polymer is advantageously comprised between 10/90 and 90/10, preferably between 20/80 and 80/20, more preferably between 30/70 and 70/30.

The friction reducing polymer according to the invention and the second friction reducing polymer can be added to the fracturing fluid separately or as a blend.

### Method for the hydraulic fracturing of an underground oil or gas reservoir

The present invention also relates to a method for hydraulic fracturing of an underground oil or gas reservoir, said method comprising injecting into the oil or gas underground reservoir a fracturing fluid comprising at least one friction reducing polymer, said friction reducing polymer comprising:
- at least one hydrophilic monomer;
- at least one crosslinker;
the quantity of crosslinker in the friction reducing polymer being comprised between 0.5 and 50 ppm, based on the total weight of monomer(s) of the friction reducing polymer.

Injection is carried out under pressure in order to create fractures distributed along the entire length of the production well.

Optionally, before, during or after the creation of the fractures, at least one oxidizing compound and/or at least one surfactant compound is injected into the reservoir.

Injecting a surfactant compound helps reducing the viscosity generated by the polymer by inhibiting hydrophobic interchain interactions, while injecting the oxidizing compound destroys the polymer. In both cases, injection allows a fluid viscosity close to that of water to be re-established.

Oxidizing compounds include bleach (an aqueous solution of a hypochlorite salt), hydrogen peroxide, ozone, chloramines, persulphates, permanganates and perchlorates.

The chemical nature of the surfactant compound(s) is not critical. They can be anionic, non-ionic, amphoteric, zwitterionic and/or cationic. The surface-active compound(s) of the invention preferably carry anionic charges.

Preferably, the surfactant compounds used are chosen from anionic surfactants and their zwitterions chosen from the group comprising derivatives of alkylsulphates, alkyl ether sulphates, arylalkylsulphates, arylalkylether sulphates, alkylsulphonates, alkyl ether sulphonates, arylalkylsulphonates, arylalkylether sulphonates, alkylphosphates, alkyletherphosphates, arylalkylphosphates, arylalkyletherphosphates, alkylphosphonates, alkyletherphosphonates, arylalkylphosphonates, arylalkyletherphosphonates, alkylcarboxylates, alkylethercarboxylates, arylalkylcarboxylates, arylalkylethercarboxylates, polyalkyl ethers, arylalkyl polyethers, etc.

An alkyl chain is defined as a chain of 6 to 24 carbons, branched or unbranched, with or without several units, which may optionally include one or more heteroatoms (O, N, S). An arylalkyl chain is defined as a chain of 6 to 24 carbons, branched or unbranched, comprising one or more aromatic rings and possibly comprising one or more heteroatoms (O, N, S).

The surfactant compounds most commonly used, for reasons of cost, stability and availability, are of the sulphonate or sulphate type, in the form of alkali metal or ammonium salts.

Finaly, the present invention also relates to a method comprising putting in contact a fluid coming from wastewater management, mining industry, paper industry, agriculture, textile industry or drilling operation, with a friction reducing polymer which comprises:
- at least one hydrophilic monomer;
- at least one crosslinker;
the quantity of crosslinker in the friction reducing polymer being comprised between 0.1 and 50 ppm, based on the total weight of monomer(s) of the friction reducing polymer.

### EXAMPLES

The respective amounts of the components in the inverse emulsions (water-in-oil) are given as weight percentages, based on the total weight of the inverse emulsions.

List of abbreviation:
AM: Acrylamide;
ADC: Dimethylaminoethyl acrylate methyl chloride quaternary salt;
MBA: N,N'-methylene bis acrylamide (crosslinker);
TAAC: Tetraallylammonium chloride (crosslinker);
TAIC: Triallylisocyanurate (crosslinker).

**Example 1: Preparation of friction reducing polymers P1 to P15** according to the invention and comparative polymers **CE-P1** to **CE-P5.**

The polymers are prepared by polymerization in inverse emulsion.

### Preparation of the hydrophilic phase

In a reactor equipped with a stirring system are introduced at room temperature:
- 45% by weight of a solution of acrylamide (50% by weight in water);
- 25% by weight of a solution of dimethylaminoethyl acrylate methyl chloride (75% by weight in water);
- 4% by weight of deionized water;
- 0.001% by weight of sodium hypophosphite (chain transfer agent);
- 0.0002% by weight of N,N'-methylene bis acrylamide.

### Preparation of the lipophilic phase

2% by weight of Span^{®} 80 (sorbitan monooleate) and 1% by weight of Tween^{™} 81 (sorbitan monooleate 5 EO) are mixed in 20% by weight of Exxsol^{®} D100 S (aliphatic hydrocarbons).

### Emulsification of the aqueous phase in the lipophilic phase

The hydrophilic phase is added and mixed with the lipophilic phase to form an inverse emulsion.

The resulting emulsion is flushed with nitrogen for 30 minutes while the temperature is controlled at 25°C.

The polymerization is then initiated by the addition of the following redox system:
- 0.002% by weight of peroxide;
- 0.75% by weight of a solution of sodium metabisulfite (0.05% by weight in water) added at a rate of 0.1 milliliter per minute.

The polymerization temperature is controlled between 38°C and 42°C for 90 minutes. Residual monomers are scavenged by feeding 0.318% by weight of a solution of sodium metabisulfite (0.05% by weight in water) at a rate of 1.0 milliliter per minute.

Finally, 3% by weight of Lutensol^{®} TO 89 (ethoxylated alcohol) are added to the inverse emulsion.

The polymer **P1** is obtained. The inverse emulsion contains 40% by weight of polymer **P1**.

The same protocol is repeated to prepare polymers **P2** to **P15** and comparative polymers **CE-P1** to **CE-P5** by changing the monomer composition and the quantity and nature of the crosslinker and the chain transfer agent.

When the friction reducing polymer is anionic, the inverse emulsion contains 30% by weight of polymer.

The compositions of the friction reducing polymers **P1** to **P15** according to the invention and comparative polymers **CE-P1** to **CE-P5** are summarized in the Table 1 below.

| **Polymer** | **Monomer composition (mol%)** | **Chain transfer agent (ppm)** | **Crosslinker** | | |
|---|---|---|---|---|---|
| | | | **MBA (ppm)** | **TAAC (ppm)** | **TAIC (ppm)** |
| **P1** | AM/ADC 75/25 | 1 | 2 | - | - |
| **P2** | AM/ADC 75/25 | 1 | 5 | - | - |
| **CE-P1** | AM/ADC 75/25 | - | - | - | - |
| **P3** | AM/ADC 75/25 | - | 2 | - | - |
| **P4** | AM/ADC 75/25 | - | 5 | - | - |
| **CE-P2** | AM/ADC 75/25 | 1 | - | - | - |
| **CE-P3** | AM/ADC 75/25 | 10 | - | - | - |
| **P5** | AM/AA 70/30 | 1 | 2 | - | - |
| **P6** | AM/AA 70/30 | 1 | 5 | - | - |
| **P7** | AM/ADC 75/25 | 1 | 0.5 | - | - |
| **CE-P4** | AM/ADC 75/25 | 1 | - | 55 | - |
| **P8** | AM/ADC 75/25 | 1 | - | 10 | - |
| **P9** | AM/ADC 75/25 | 1 | - | 25 | - |
| **P10** | AM/ADC 75/25 | 1 | - | - | 25 |
| **P11** | AM/AA 70/30 | 1 | - | 5 | - |
| **P12** | AM/AA 70/30 | 1 | - | 10 | - |
| **CE-P5** | AM/ADC 75/25 | 1 | 55 | - | - |
| **P13** | AM/ADC 75/25 | 1 | - | 40 | - |
| **P14** | AM/ADC 75/25 | - | 10 | - | - |
| **P15** | AM/ADC 75/25 | 1 | 10 | - | - |

Table 1 - Composition of polymers **P1** to **P15** according to the invention and comparative polymers **CE-P1** to **CE-P5.**

### Example 2: Friction Flow Loop Testing

### Brine preparation

The respective amounts of salts in the fracturing fluid are given as weight percentages, based on the total weight of the fracturing fluid.

A synthetic brine B1 is prepared comprising 8.5% by weight of sodium chloride NaCl and 3.3% by weight of calcium chloride CaCl₂.2H₂O.

A synthetic brine B2 is prepared comprising 2% by weight of potassium chloride KCl.

A friction flow loop was constructed using stainless steel tubing with a ¼ outer diameter and an overall length of 20 feet.

Tested solutions are pumped from the bottom of a tapered 5-liter reservoir, flowed through the tubing, and returned to the reservoir.

The flow is provided by a triplex pump equipped with a variable speed drive. 4 liters of the brine previously prepared are added to sample reservoir of the flow loop.

Brine B1 is mixed with the cationic polymers and brine B2 is mixed with the anionic polymers.

The pump is started and set to deliver a flow rate of 1.5 gallon per minute.

The brine is recirculated through the flow loop until the temperature equilibrates at 25°C, establishing a stabilized pressure differential.

This pressure is considered as the "initial pressure" of the brine.

0.1 gpt (gallons of inverse emulsion per thousand gallons of brine) of one of inverse emulsion EMI-1 to EMI-20 is injected with a syringe into the sample reservoir containing the brine and a timer is started. The start of the injection corresponds to T₀.

The pressure is monitored every second for 5 minutes. The percentage of friction reduction (% FR) at a given time 't' is calculated from the initial pressure drop ΔPᵢ and the pressure drop at time t, ΔPt using the equation: $% {FR}_{t} = \frac{Δ {P}_{i} - Δ {P}_{t}}{Δ {P}_{i}} \times 100$

*FRₘₐₓ* represents the higher percentage of friction reduction.

*FR₅ₘᵢₙ* represents the percentage of friction reduction at 5 minutes.

The %lossFR₅ₘᵢₙ is calculated using the equation: ${%lossFR}_{5 min} = \frac{{FR}_{max} - {FR}_{5 min}}{{FR}_{max}} \times 100$

The results are considered acceptable when the loss in friction reducing effect does not exceed 20%.

The results are summarized in the Table 2 below.

| **Polymer** | **Brine** | **FRₘₐₓ (%)** | **FR₅ₘᵢₙ (% )** | **%lossFR₅ₘᵢₙ** |
|---|---|---|---|---|
| **P1** | B1 | 55 | 54 | 1.8 |
| **P2** | B1 | 49 | 47 | 4 |
| **CE-P1** | B1 | 55 | 37 | 33 |
| **P3** | B1 | 36 | 32 | 11 |
| **P4** | B1 | 31 | 28 | 10 |
| **CE-P2** | B1 | 55 | 36 | 35 |
| **CE-P3** | B1 | 53 | 31 | 42 |
| **P5** | B2 | 40 | 39 | 3 |
| **P6** | B2 | 30 | 30 | 0 |
| **P7** | B1 | 50 | 41 | 18 |
| **CE-P4** | B1 | 4 | 1.7 | 58 |
| **P8** | B1 | 38 | 35 | 8 |
| **P9** | B1 | 32 | 32 | 0 |
| **P10** | B1 | 45 | 38 | 15.6 |
| **P11** | B2 | 46 | 43 | 7 |
| **P12** | B2 | 36 | 35 | 3 |
| **CE-P5** | B1 | 4 | 1,6 | 60 |
| **P13** | B1 | 20 | 17 | 17 |
| **P14** | B1 | 30 | 26 | 13 |
| **P15** | B1 | 35 | 33 | 6 |

Table 2 - Results of the friction reducing effect of polymers **P1** to **P15** according to the invention in comparison of the friction reducing effect of comparative polymers **CE-P1 to CE-P5** in a fracturing fluid

These results show that the friction reducing performances of the friction reducing polymers according to the invention (**P1** to **P15**) have improved friction reducing properties compared to the comparative friction reducing polymers (**CE-P1** to **CE-P5**). It is also possible to optimize the ratio between the chain transfer agent and crosslinker to obtain very good maximum friction reduction (FRₘₐₓ) while keeping performances overtime.

## Claims

1. A friction reducing polymer comprising at least:
- one hydrophilic monomer;
- one crosslinker;
the quantity of crosslinker being comprised between 0.5 and 50 ppm, based on the total weight of monomer(s) of the friction reducing polymer.

2. Friction reducing polymer according to claim 1, ***wherein*** the quantity of crosslinker is comprised between 1 and 20 ppm based on the total weight of monomer(s) of the friction reducing polymer.

3. Friction reducing polymer according to claim 1 or 2, ***wherein*** the friction reducing polymer is water-soluble.

4. Friction reducing polymer according to any one of the preceding claims, ***wherein*** the crosslinker is selected from the group consisting of: N,N-methylene bis acrylamide, triallylamine, tetraallylammonium chloride, polyethylene glycol diacrylate, allyl pentaerythritol, allyl glycidyl ether, trimethylolpropane triacrylate, divinylbenzene, triallyl isocyanurate.

5. Friction reducing polymer according to any one of the preceding claims, ***wherein*** the friction reducing polymer further comprises at least one transfer agent.

6. Friction reducing polymer according to any one of the preceding claims, ***wherein*** the friction reducing polymer comprises between 0.1 and 50 ppm of a transfer agent, based on the total weight of monomer(s) of the friction reducing polymer.

7. Friction reducing polymer according to any one of the preceding claims, ***wherein*** the friction reduction polymer has a bio-sourced carbon content of between 5% by weight and 100% by weight, based on the total carbon weight of the polymer, the bio-sourced carbon content being measured according to the standard ASTM D6866-21, Method B.

8. Friction reducing polymer according to any one of the preceding claims, ***wherein*** the friction reducing polymer is obtained by polymerization in inverse emulsion.

9. Friction reducing polymer according to claim 7, ***wherein*** one or more components of the inverse emulsion has a bio-sourced carbon content of between 5% by weight and 100% by weight, based on the total carbon weight of the component, the bio-sourced carbon content being measured according to the standard ASTM D6866-21, Method B.

10. A fracturing fluid comprising:
i) a hydrophilic phase;
ii) at least one proppant; and
iii) the friction reducing polymer according to any one of claims 1 to 9.

11. Fracturing fluid according to claim 10, ***wherein*** the fracturing fluid comprises a second friction reducing polymer different from the friction reducing polymer according to any one of claims 1 to 9.

12. Fracturing fluid according to claim 11, ***wherein*** the second friction reducing polymer is free of crosslinker.

13. Fracturing fluid according to claim 11 or 12, ***wherein*** the ratio between the friction reducing polymer according to any one of claims 1 to 9 and the second friction reducing polymer is comprised between 10/90 and 90/10.

14. A method for the hydraulic fracturing of an underground hydrocarbon (oil and/or gas) reservoir, that comprises the following steps:
- preparing a fracturing fluid according to any one of claims 10 to 13,
- injecting said fracturing fluid into the underground hydrocarbon reservoir and
- recovering hydrocarbon.

15. A method for reducing friction of a fluid in a pipe comprising bringing into contact said fluid with a friction reducing polymer according to any one of claims 1 to 9, wherein said fluid comes from a wastewater treatment plant, mining industry, paper industry, agriculture, textile industry or drilling operation.
